# EUROPEAN PATENT SPECIFICATION

(11) **EP 3 548 795 B1**
(45) Date of publication and mention of the grant of the patent: **11.09.2024**
(21) Application number: 17818622.7
(22) Date of filing: 28.11.2017
(51) Int. Cl.: F17C 9/02, F17C 7/04

(54) **HEAT PUMP WITH PRIME MOVER IN CRYOGENIC APPLICATIONS AND REFRIGERATING FLUIDS**
WÄRMEPUMPE MIT ANTRIEBSMOTOR IN KRYOGENEN ANWENDUNGEN UND KÜHLFLÜSSIGKEITEN
POMPE À CHALEUR COMPRENANT UN MOTEUR D'ENTRAÎNEMENT DANS DES APPLICATIONS CRYOGÉNIQUES ET DES FLUIDES RÉFRIGÉRANTS

(30) Priority: 30.11.2016 IT 201600121441
(43) Date of publication of application: 09.10.2019
(73) Proprietor: Saipem S.p.A., 20138 Milano (IT)
(72) Inventor: MACCHI, Ennio, 20138 Milano (IT); GIUFFRIDA, Antonio, 20138 Milano (IT); VALENTI, Gianluca, 20138 Milano (IT); FORESTI, Stefano, 20138 Milano (IT); DE RINALDIS, Salvatore, 20138 Milano (IT); INGLESE, Luca Davide, 20138 Milano (IT); LEPORE, Alessandro, 20138 Milano (IT); MELONI, Fabrizio, 20138 Milano (IT)
(74) Representative: Croce, Valeria
(86) International application number: PCT/IB2017/057442
(87) International publication number: WO 2018/100486

(56) References cited:
- EP-A1- 2 309 165
- EP-A1- 3 032 163
- FR-A1- 2 952 161
- KR-A- 20110 039 714
- US-A- 4 231 226
- US-A1- 2006 225 448

## Description

### Technical field of the invention

The present invention finds application in the energy sector, in particular for reducing the energy consumption needed in regasification terminals of a liquefied gas.

### Prior art

There are known regasification technologies for Liquefied natural gas (LNG).

Liquefied natural gas is a mixture of natural gas mainly consisting of methane, and in lesser measure, of other light hydrocarbons, such as, for example, ethane, propane, iso-butane, n-butane, pentane, and nitrogen, which is converted from the gaseous state, in which it is at ambient temperature, to about -160°C, to allow its transportation.

The liquefaction systems are located near the natural gas production sites, while the regasification systems (or "regasification terminals") are situated near the users.

Most systems (about 85%) are situated *onshore,* while the remaining part (about 15%) are *offshore* on platforms or ships.

More commonly, each regasification terminal comprises multiple regasification lines to satisfy the liquefied natural gas load or the demands, and for reasons for flexibility or technical needs (e.g. for line maintenance).

The regasification technologies normally concern liquefied natural gas stored in tanks at atmospheric pressure and at a temperature of -160°C, and comprise the steps of compressing the gas or pumping the LNG to about 70-80 bar and of vaporizing and superheating to about 3°C.

The thermal power required for the regasification of 139 t/h from about -155°c to about +3°C is about 27 MWt for regasification line, while the electrical power is about 2.25 MWe (about 4.85 MWe if the other auxiliary loads of the system are taken into account; about 19.4 MWe maximum electrical load of the system on 4 regasification lines).

Among these, the most used, either singularly or in mutual combination, are *Open Rack Vaporizer* (ORV) technology, used in about 70% of regasification terminals, and *Submerged Combustion Vaporizer* (SCV) technology.

### Open Rack Vaporizer (ORV)

In this technology, the natural gas in liquid state (about 70-80 bar and at a temperature of -160°C) is made to run from the bottom upwards inside aluminum pipes arranged side-by-side to form panels; vaporization occurs gradually as the fluid proceeds.

The heat vector is the seawater which by flowing from the top downwards on the outer surface of the pipes provides the heat needed for vaporization by difference of temperature.

In particular, the heat exchange is optimized by the pattern of the profile and by the surface roughness of the pipes, which achieve a uniform distribution of the thin film of seawater on the panel.

### Submerged Combustion Vaporizer (SCV)

Such technology exploits a bath of demineralized water heated by a submerged flame burner as heat vector; in particular, *Fuel Gas* (FG) is burnt in the combustion section and the produced fumes pass through a serpentine of perforated pipes from which the bubbles of burnt gas exit, which heat the water bath also transferring the condensation heat.

The liquefied natural gas (LNG) vaporizes in another serpentine in pipes made of stainless steel and submerged in the same demineralised water bath.

The same water of the bath is maintained in circulation in order to guarantee a uniform temperature distribution.

The exhaust fumes, instead, are discharged from the discharge stack of the *SCV.*

A cogeneration system used in LNG regasification was made in Belgium (Zeebrugee) and consists of a gas turbine, which exports electrical energy (about 40 MWe), the exhaust gases of which are sent to a cooling tower with a closed circuit of demineralized water, which in turn discharges heat through a serpentine to a vaporization tank; in the vaporization tank there is present a serpentine of LNG which regasifies.

So, in general, the known technologies do not allow the production of the electrical energy needed for the system and lead the loss of a large amount of energy.

With particular reference to the *Submerged Combustion Vaporizer* (SCV), this technology implies a consumption of fuel gas equal to about 1.5% of the produced gas, it produces carbon dioxide which lowers the pH of the water bath, whereby requiring treatments with caustic soda, and determines a production of about 50,000 t/year of CO₂ for regasifying 139 t/h.

The *Open Rack Vaporizer* technology, instead, may cause in part the freezing of the seawater in the outer part of the pipes, especially in the sections in which the LNG is coldest; moreover: i) it may be exploited in geographic regions and/or in seasons in which the seawater temperature is at least 5-12°C, which are mainly by subtropical zones, ii) the seawater must be preventively treated to either eliminate or reduce the heavy metal content which would damage the zinc coating of the pipes, iii) it implies a consumption of electrical energy for operating the pumps for the seawater which must overcome a geodesic difference of level equal to the development in height of the ORV, with additional consumptions of 1.2 MWe per regasification line with respect to SCV technology (total system power equal to 24.2 MWe), iv) finally, the technology is rather complex and available from a limited number of suppliers.

Considering the cogeneration, instead, it is worth noting that applied to regasification, it brings the ratio between thermal and electrical load of a regasification line to be heavily imbalanced towards the thermal part (about 5-12), while for a prime motor, such value is comprised between 1 and 3 (passing from an internal combustion engine to a gas turbine); so, it is possible to cover only the electrical load, but not the thermal load, with the prime mover alone.

For example, with a 2 MWe internal combustion engine (equal to the electrical demand of the regasification line) and 45% efficiency, the thermal power recovered by the exhaust gases plus *cooling* from the lubrication oil water cooling circuit is about 2.5 MWt much lower than that required by the regasification line (27 MWt); the remaining part of thermal power should be provided by a conventional regasification technology with primary energy consumption equal to 29 MWt, thus obtaining a very small energy saving index FGS = 60 *(Fuel Gas Saving -* (Innovative technology consumption - SCV consumption)/ SCV consumption)).

### Summary of the invention

The authors of the present invention have surprisingly found that a power cycle and a heat pump for converting the electrical load *surplus* into thermal load useful for the regasification can be inserted in a traditional regasification line.

### Object of the invention

One object is to describe a liquefied gas regasification line.

Another object of the invention relates to a regasification terminal comprising a plurality of liquefied gas regasification lines.

It is a further object to describe a process for generating heat and electrical energy in a regasification line for liquefied gas.

### Brief description of the figures

Figure 1 shows a first embodiment of a regasification line according to the present invention in which the power cycle comprises an *internal combustion engine* ("ICE");
Figure 2 shows a second embodiment of a regasification line according to the present invention wherein the power cycle comprises a *gas turbine* ("GT");

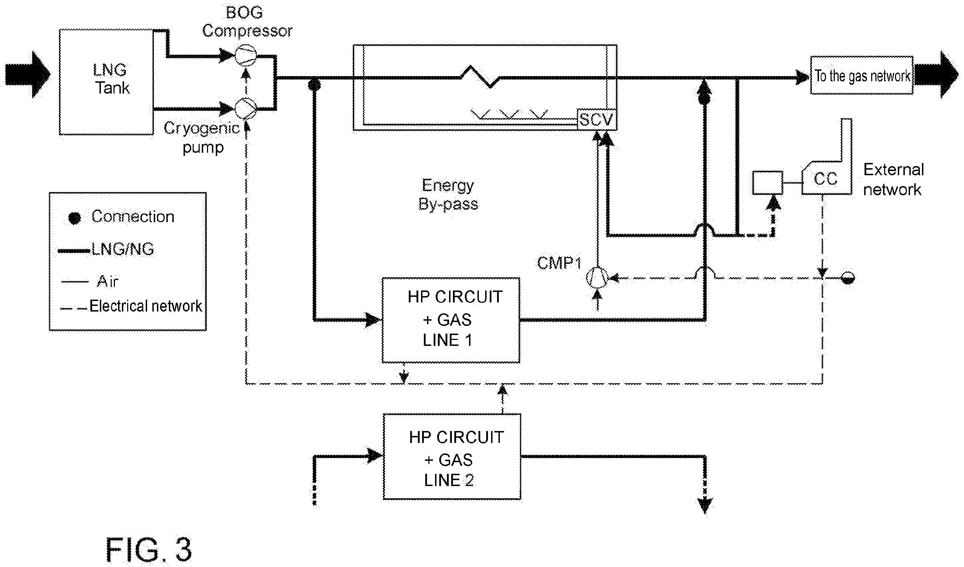

Figure 3 shows a portion of a system according to the present invention which diagrammatically illustrates the energy by-pass concept (HP - *heat pump);*
Figure 4 shows a configuration of the regasification line according to an alternative embodiment of the present invention.

### Detailed description of the invention

It is worth noting that the present invention is described in particular with regards to the regasification of liquefied natural gas (LNG), but the regasification line, the regasification terminal and the regasification process described below can equally apply to the regasification or to the vaporization of other liquefied fluids stored at low temperatures (lower than about 0°C) or at cryogenic temperatures (lower than -45°C).

Hereinafter, in the description, the expression "liquefied gas" means a prevalently fluid composition.

The present invention is equally applied to the regasification or vaporization of a liquefied gas chosen from the group which comprises, for example: air, nitrogen, hydrocarbon compounds, e.g. alkanes, such as for example propane and butane, or alkenes, such as for example ethylene and propylene, liquefied natural gas (LNG); hydrogen.

For the sake of simplicity, in the description and in the figures reference will be made to a regasification line for liquefied natural gas (LNG).

The expression "regasification line"means the portion of regasification system (or line) which comprises the liquefied natural gas (LNG) regasification structures, apparatuses, machinery and systems.

Such structures, apparatuses, machinery and systems originate, in particular, from a *tank* in which the LNG is stored and end at the introduction point of the regasified LNG into the distribution network of the gas itself.

More in detail, in the liquefied natural gas (LGN) is stored at atmospheric pressure and at a temperature of about -160°C in the tank.

In particular, the liquefied gas tank may be located in a place or in a structure different from that of the regasification system, which may be for example *onshore* or *offshore.*

So, it can be noted that the information has *onshore* applications and above all, by virtue of the availability of seawater, *offshore* applications or on *floaters.*

An element of the line is represented by the bath of a section of *Submerged Combustion Vaporizer* - *SCV.*

Before entering the vaporization bath, the LNG may be subjected to a step of preliminary compressing to take it to a pressure of about 70-80 bar.

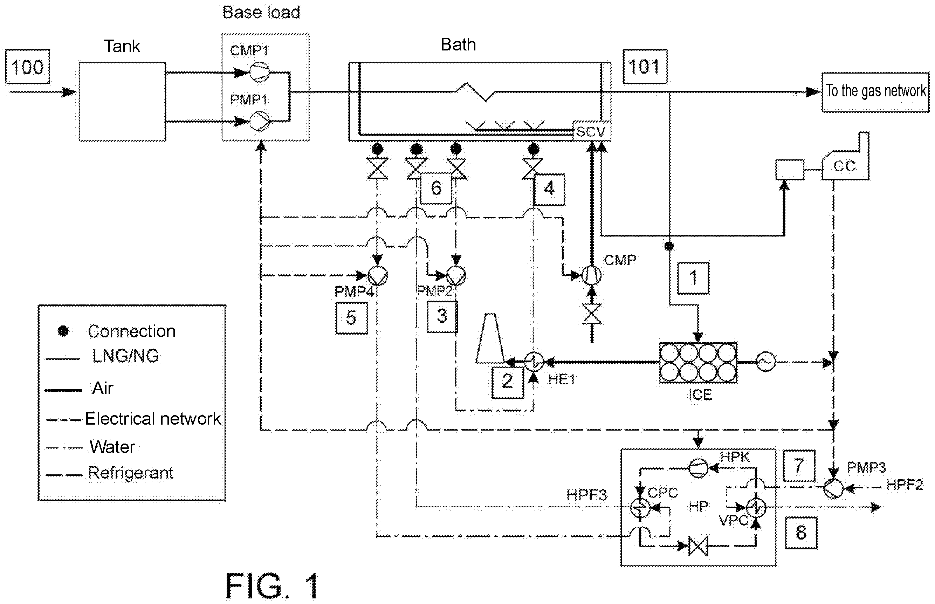

The compression is operated by a low-pressure pump (which consumes about 400 kWe) and by a high-pressure pump (which consumes about 1300 kWe), which operate in series (PMP1 in figure 1).

In figure 1, CMP1 represents the *boil off gas compressors* (BOG).

According a preferred aspect of the invention, at the inlet of the bath of the SCV the liquefied natural gas (LNG) is in supercritical state, being at about 70-80 bars and -155°C.

In the *SCV* section, the liquefied natural gas (LNG) is vaporized and superheated to a temperature of about 3°C.

Once vaporized, the natural gas may be introduced into the natural gas distribution network.

According to an aspect of the present invention, a regasification line (the base circuit) of the liquefied natural gas (LNG) is modified so as to comprise an energy *by-pass* circuit which comprises:
- a power cycle comprising an internal combustion prime mover represented by an internal combustion engine (ICE) or by a gas turbine (GT);
- a first heat exchanger (HE1) operating on the first intermediate fluid circuit;
- a heat pump (HP in the figures) operating with a refrigerating fluid and comprising an evaporator (VPC) for the heat exchange with a second intermediate fluid (HPF2) and a condenser (CPC) for the heat exchanger with a third intermediate fluid (HPF3);
- an electrical circuit.

For the other objects of the present invention, the following are therefore described:
- a traditional regasification line, already existing, thus modified to integrate a natural gas regasification *by-pass* circuit *(revamping);* and
- a new regasification line comprising the by-pass circuit, e.g. for constructing new systems.

### Power cycle/first mover

According to the invention, a power/prime mover cycle produces electrical energy and heat (in form of exhaust fumes), which is recovered by means of a *Waste Heat Recovery Unit* (*WHRU*).

For the purposes of the present invention, the power cycle may comprise:
- an internal combustion gas engine (ICE), or
- a gas turbine (GT).

Such cycle comprises a heat exchanger (HE1) for recovering the produced heat.

### Circuit of a first intermediate fluid

As described above, the regasification line of the liquefied natural gas (LNG) modified according to the present invention comprises a first heat exchanger (HE1) which operates on a circuit of a first intermediate fluid.

According to a preferred aspect, said first intermediate fluid is tempered water.

In particular, such circuit is integrated with the bath of the *Submerged Combustion Vaporizer (SCV)* section by means of appropriate tempered water inlet and introduction connections.

A pump (PMP2 in Figure 1) for the circulation of water may also be envisaged downstream of the inlet connection.

The circuit of the first intermediate fluid is also integrated with a heat exchanger (HE1) in which a heat exchange occurs with which the heat produced by the power circuit/first mover (internal combustion engine or gas turbine) is transferred to the water, which is thus heated from about 18°C to about 50°C.

Such heat exchange produces a thermal power corresponding to about 6 MWt.

So, the water is successively re-introduced into the bath from the SCV section at about 50°C, thereby contributing to the vaporization of the liquefied natural gas (LNG).

### Heat pump

For the purposes of the present invention, the heat pump (HP) comprises:
- a refrigerating fluid circuit, possibly comprising a compressor (HPK in the figures) for said refrigerating fluid,
- a condenser (CPC in the figures) and an evaporator (VPC in the figures).

In particular, the refrigerating fluid circuit operates by means of a fluid preferably chosen from the group which comprises: water-glycol and other refrigerating fluids, such as for example R134a, R32, R143a, R125.

According to the present invention, said refrigerating fluid operates:
- a first heat exchange in the evaporator (VPC), with which the refrigerating fluid acquires heat from said second intermediate fluid (HPF2);
- a second heat exchange in the condenser (CPC), with which the refrigerating fluid surrenders heat to said third intermediate fluid (HPF3).

For the purposes of the present invention, the second intermediate fluid (HPF2) is preferably represented by seawater, which is extracted at a temperature of above 9°C and cooled to about 4°C.

Such heat exchange produces a thermal power of about 18.6 MWt.

Possibly, before the use of the heat pump, the seawater is subjected to a step of filtration in order to remove organic substances and material, represented, for example, by algae and mollusks, and inorganic substances, such as sand or particulate.

It is worth noting that in the present description, where reference is made to "seawater" it is not only meant pumped seawater, appropriately treated to remove sediments, but more in general environmental water obtained from rivers, canals, wells, natural basins, such as lakes, etc., and artificial basins.

According to an alternative embodiment of the present invention, the second intermediate fluid (HPF2) may be environmental air.

For the purposes of the present invention, the third intermediate fluid (HPF3) is tempered water, which is heated from about 18°C to about 23°C.

More in particular, said third intermediate fluid (HPF3) circulates in a circuit for a third fluid which is integrated with the vaporization bath of a *Submerged Combustion Vaporizer* section *(SCV).*

Such integration is obtained by means of appropriate inlet and introduction connections.

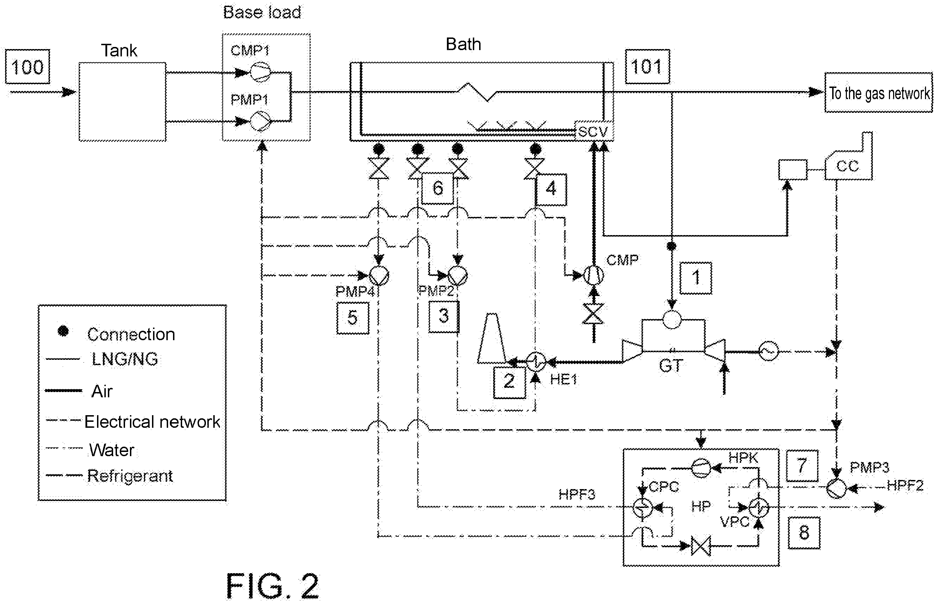

According to an embodiment of the invention, it is possible also to envisage the insertion of a pump downstream of the water inlet connection (PMP4 in figure 1 and 2).

Such tempered water circuit, thus, operates a heat exchange adapted to produce the vaporization of the liquefied natural gas (LNG) in the bath of the *Submerged Combustion Vaporizer* section *(SCV).*

The heat pump can provide a heat corresponding to about 21.4 MWt.

According to a preferred embodiment of the invention, the heat pump (HP) described above is fed by the mechanical or electrical power of the prime mover (internal combustion engine (ICE) or gas turbine (GT)) indicated above.

According to an alternative embodiment of the invention not shown in the figures, the circuit for the third intermediate fluid (HPF3) and the circuit for the first intermediate fluid may be integrated.

In such case, a heat exchange is performed between the refrigerating fluid and said intermediate fluid in the condenser of the heat pump (CPC), transferring heat to the latter before the further step of exchanging of heat in the exchanger (HE1).

### Electrical circuit

With regards to the electrical needs, the system of the invention requires 2.25 MWe to make the regasification line independent in terms of energy and 4.85 MWe to cover 1/4 of the electrical load of the entire regasification terminal.

In particular, the system of the invention provides the entire electrical needs of a regasification line (2.25 MWe) or 1/4 of the electrical load of the entire regasification terminal and feeds the low-pressure and high-pressure cryogenic pumps (PMP1), the *boil off gas compressor* (CMP1) and the pumps for pumping seawater (PMP3), the circulation pumps (PMP4) of the tempered water circuit of the heat pump, and finally of the circulation pump (PMP2) of the tempered water circuit of the WHRU.

In the light of the description provided above, the present invention provides a liquefied natural gas regasification line comprising a vaporization section of said LNG, a prime mover (internal combustion engine (ICE) or gas turbine (GT)), a first heat exchanger (HE1) operating on the circuit of a first intermediate fluid and a heat pump (HP), comprising an evaporator (VPC) and a condenser (CPC), said heat pump operating with a refrigerating fluid which in said evaporator (VPC) acquires heat from a second intermediate fluid (HPF2) and which in said condenser (CPC) transfers heat to a third intermediate fluid (HPF3), said third intermediate fluid (HPF3) operating a further heat exchanger with which it surrenders heat to the liquefied natural gas (LNG), wherein said prime mover (internal combustion engine (ICE) or gas turbine (GT)) supplies mechanical or electrical energy to said heat pump (HP) and thermal energy to said first heat exchanger (HE1).

According to the present invention, the regasification line comprises a liquefied natural gas vaporization section which is of the *Submerged Combustion Vaporizer* type (SCV).

It is a further object of the invention to describe a regasification terminal comprising one or more liquefied natural gas (LNG) regasification lines.

In particular, each regasification line is the line described above according to the present invention.

A regasification terminal is a system and generally comprises common structures represented by:
- storage tank of the liquefied natural gas,
- compression section comprising cryogenic pumps; generally, there are a low-pressure pump (which consumes about 400 kWe) and a high-pressure pump (which consumes about 1300 kWe),

- *boil-off gas compressor* (BOG compressor),
- connection to the external network for supplying electrical energy, when available, or an electrical generation unit, such as for example a gas turbine (GT) or internal combustion engine (ICE),
- vaporization section of the liquefied gas, e.g. by means of *Submerged Combustion Vaporization* or *Open Rack Vaporizer* technology with its own air feeding circuit and its compressor,
- and, precisely, one or more traditional regasification lines, of which at least one regasification line according to the *by-pass* configuration described above, in order to satisfy the different needs and to allow a good flexibility of the system.

According to an embodiment of the invention, the terminal comprises from 2, 3, 4, 5 or 6 lines, preferably 4.

The various regasification lines operate in parallel.

Such structure thus allows the adaptation of existing systems with the technology proposed by the present invention *(revamping).*

For the purposes of the present invention, a regasification terminal of new construction may comprise one or more regasification lines according to the *by-pass* configuration described above.

For technical system needs, it cannot be excluded that some elements of the single circuits are in common to multiple regasification lines.

The possibility of constructing a system comprising various regasification lines thus renders it possible to implement the cogeneration process (i.e. the combined production by the prime mover of electrical and thermal power, both of which are used) of the present invention independently, either at the same time or not, in each regasification line, with evident advantages in terms of flexibility.

According to a further object of the invention, a process is described for the generation of heat and of electrical energy (cogeneration).

In particular, such method comprises the steps of:
1) generating mechanical or electrical energy and thermal energy (cogeneration) by means of a prime mover (internal combustion engine (ICE) or gas turbine (GT)),
2) operating a step of regasifying said liquefied gas with a first intermediate fluid heated by means of the thermal energy generated in step 1), and
3) implementing a heat pump with a refrigerating fluid which operates the cooling of a second intermediate fluid (HPF2) and the heating of a third intermediate fluid (HPF3).

According to the invention, the prime mover of step 1) is an internal combustion engine (ICE) or a gas turbine (GT) .

In particular, the consumption of the regasified liquefied natural gas *(Fuel Gas* -FG) for regasification is indicatively of:
- flow rate of about 0.9 t/h in the case of an internal combustion engine (which is about 0.7% of the regasified LNG flow rate);
- flow rate of about 1.3 t/h in the case of a gas turbine (which is about 0.9% of the regasified LNG flow rate).

The first intermediate fluid of step 2) is tempered water.

Furthermore, the regasification of step 2) is operated, at least partially, by means of the thermal energy produced in step 1) by the prime mover (internal combustion engine (ICE) or gas turbine (GT)).

According to a first embodiment of the invention, in step 1) the prime mover (internal combustion engine (ICE) or gas turbine (GT)) is supplied with at least one portion of the regasified liquefied natural gas (LNG) fluid, which preferably is a portion of liquefied natural gas (LNG) regasified in step 2).

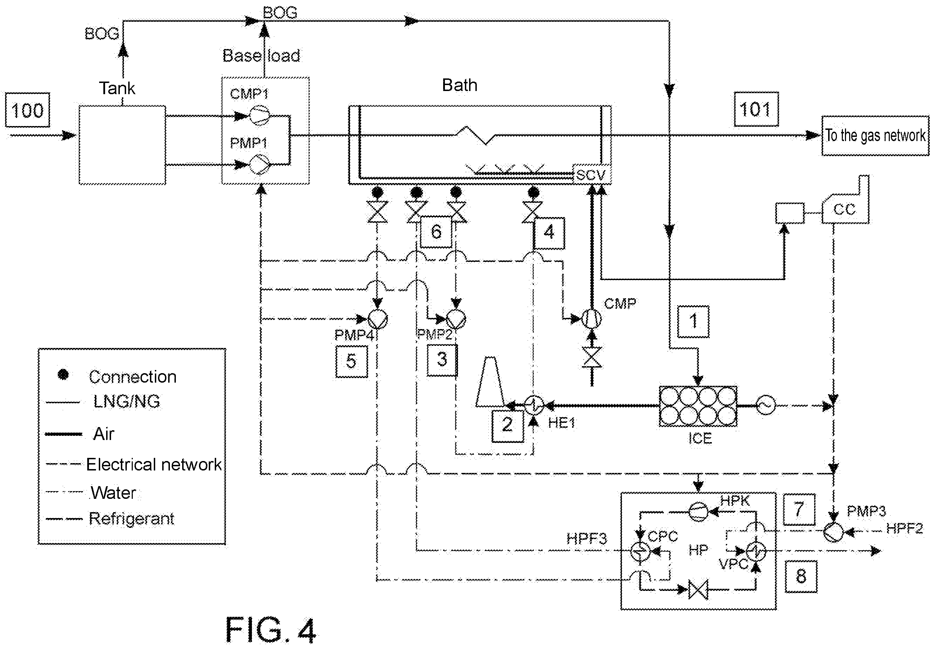

According to an alternative embodiment of the invention shown in Figure 4, the internal combustion engine (ICE) is fed by a flow of *Boil of Gas* coming from the tank or from the BOG compressor supply (CMP1).

The heat pump (HP), instead, operates with a liquid preferably chosen from the group comprising water-glycol and other refrigerating fluids, such as for example R134a, R32, R143a, R125.

According to an embodiment of the invention, the second intermediate fluid (HPF2) is preferably seawater.

According to an alternative embodiment of the invention, the second intermediate fluid (HPF2) is preferably ambient air.

According to the invention, the third intermediate fluid (HPF3) is tempered water.

According to the present invention, in the described process the third intermediate fluid (HPF3) heated in step 3) operates a step of regasification of the liquefied natural gas (LNG).

According to an alternative embodiment, the circuit of the first intermediate fluid and the circuit of the third intermediate fluid (HPF3) are integrated.

In such a case, a heat exchange is performed between the refrigerating fluid and said intermediate fluid in the condenser of the heat pump (CPC), trasferring heat to the latter before the further step of exchanging of heat in the exchanger (HE1).

The process described above is particularly operated in a regasification line of the liquefied natural gas (LNG) modified according to the present invention as described above.

From the description provided above, a person skilled in the art will be able to understand the many advantages offered by the present invention.

The described technology makes it possible to work in energy *by-pass* configuration, in presence the of technical or maintenance interruptions.

The same energy *by-pass* configuration makes it possible to adjust the electrical and thermal loads of the system without stopping the production, by exploiting the electrical energy of the external network for regasification or by operating the described modular system, taking the energy from the other lines in conditions of excessive electrical energy production (electrical *surplus)* and avoiding the use of the external network.

The same energy *by-pass* configuration makes it possible to provide electrical energy to the system during maintenance and/or faults of the conventional regasification lines, operating on a fraction of the LNG flow rate.

Additionally, the process parameters make it possible to use apparatuses which are constructively simple and easily available, also requiring conventional metallurgy; this all leads to a reduction in the construction costs of the system.

The process entirely closes the electrical balance of a regasification line by a fraction of the electrical power of the entire system or of the entire regasification system.

Furthermore, the invention makes it possible to reduce the consumption of *Fuel Gas* with respect to SCV technologies greater than 500 (expressing *Fuel Gas Saving - FGS* as = (gas cycle consumption-SCV consumption)ISCV consumption, in cogeneration integrated with the heat pump.

Carbon dioxide emissions are reduced by up to 500 in proportion with the reduction of the consumption of *Fuel Gas.*

By virtue of the heat pump coupled with the power cycle, it is possible to close the thermal and electrical balances of the single line, of a fraction of the system or even of the entire system at the same time.

The efficiency of the heat pump is high, by virtue of a *Coefficient of Performance* -COP, which expresses the thermal power transferred for the regasification of the LNG and the electrical power used to transfer energy from the seawater to the LNG to be regasified to 15.

Furthermore, the heat pump can work with a temperature of the seawater from about 3°C to about 12°C and a temperature of the water of the bath from the vaporization section SCV comprised between about 15°C to about 50°C; this makes it possible to achieve very high COP values of the heat pump (the pump works as a *chiller)* .

The heat pump offers high system and operative flexibility, being able to be installed near the sea and use a remote heating type technology with a tempered water circuit or near the regasification system, making it possible to optimize the path of the seawater pipes according to specific needs.

Not less important is the fact that the present invention exploits known and consolidated technologies.

Compared to the *Open Rack Vaporizer,* instead, the present invention makes it possible to exploit the seawater also in the conditions which would hinder use of the ORV; furthermore, it is no longer needed to chemically treat the seawater and pump it to overcome the differences of level given by the height of the panels, and there is a wide availability of suppliers of the apparatuses to be used.

A person skilled in the art will also easily understand how the technology described above can be easily applied not only for the construction of new lines or regasification systems, but also for modifying existing systems *(revamping).*

The invention described in the present disclosure may be further applied to *Base Load* system sizes and to LNG flow rates corresponding to *small scale* regasification structures; in particular, the invention may be applied to small scale lines in parallel with a *Base Load* regasification line (and thus in an *energy bypass* configuration).

The term regasification described by the present invention makes it possible to satisfy multiple needs, such as, for example, the need to adapt the flow rates of system to the demands of regasified or stocked LNG and, on the contrary, to adapt the operativeness of the system to a possible reduction of the flow rate of LNG, technical needs related, for example, to routine or supplementary maintenance of one or more lines, by virtue of an undisputed management flexibility.

The configuration of the regasification line shown in Figure 4 allows the further advantage of a more efficient use of the gas (BOG, instead of Natural Gas).

Furthermore, it is worth noting that the present invention is described in particular with regards to the regasification of liquefied natural gas (LNG), but the regasification line, the regasification terminal and the regasification process herein described can equally apply to the regasification or the vaporization of other liquefied fluids stocked at low temperatures (lower than approximately 0°C) or at cryogenic temperatures (lower than -45°C).

For example, the present invention will find application to the regasification or vaporization of other liquefied gases.

## Claims

1. A process for generating mechanical or electrical energy and thermal energy in a liquefied gas regasification line comprising the steps of:
1) generating mechanical or electrical energy and thermal energy by means of a prime mover, the prime mover being an internal combustion engine (ICE) or a gas turbine (GT);
2) operating a step of regasifying said liquefied gas with a first intermediate fluid, wherein the first intermediate fluid is tempered water heated by means of the thermal energy generated in step 1) within a first heat exchanger (HE1) operating on a circuit of said first intermediate fluid;
3) implementing a heat pump (HP) with a refrigerating fluid which operates the cooling of a second intermediate fluid (HPF2) and the heating of a third intermediate fluid (HPF3), wherein said third intermediate fluid is tempered water;
wherein said third intermediate fluid (HPF3) operates a further step of regasifying said liquefied gas and wherein said heat pump (HP) is supplied with the electrical energy generated by said prime mover.

2. The process according to claim 1, wherein said refrigerating liquid is chosen from the group which comprises: water-glycol and other refrigerating fluids such as R134a, R32, R143a, R125.

3. The process according to any one of the preceding claims 1 or 2, wherein said second intermediate fluid (HPF2) is seawater or ambient air.

4. The process according to any one of the preceding claims from 1 to 3, wherein said liquefied gas is chosen from the group which comprises: liquefied natural gas (LNG), hydrogen, air, nitrogen, hydrocarbon compounds, alkanes, propane and butane, alkenes, ethylene and propylene.

5. The process according to any one of the preceding claims from 1 to 4, wherein a heat exchange is performed in the condenser of the heat pump (CPC) between the refrigerating fluid and said first intermediate fluid, with transfer of heat to the latter.

6. A liquefied gas regasification line comprising a vaporization section of said gas, a prime mover which is an internal combustion engine (ICE) or a gas turbine (GT), a first heat exchanger (HE1) operating on the circuit of a first intermediate fluid which is tempered water, said first heat exchanger (HE1) implementing a heat exchange between the thermal energy produced by said prime mover and said first intermediate fluid, said first intermediate fluid (HPF1) operating a further heat exchange in said vaporization section with which it transfers heat to the liquefied gas, and a heat pump (HP), said heat pump (HP) comprising an evaporator (VPC) and a condenser (CPC), said heat pump operating with a refrigerating fluid which in said evaporator (VPC) acquires heat from a second intermediate fluid (HPF2) and which in said condenser (CPC) transfers heat to a third intermediate fluid (HPF3), which is tempered water, said third intermediate fluid (HPF3) operating a further heat exchange with within said vaporization section which it transfers heat to the liquefied gas, wherein said prime mover supplies electrical energy to said heat pump (HP) and thermal energy to said first intermediate fluid.

7. The liquefied gas regasification line according to claim 6, wherein said refrigerating liquid is chosen from the group which comprises water-glycol and other refrigerating fluids, such as R134a, R32, R143a, R125.

8. The liquefied gas regasification line according to claim 6 or 7, wherein said second intermediate fluid (HPF2) is seawater or ambient air.

9. The liquefied gas regasification line according to any one of the preceding claims 6 to 8, wherein said liquefied gas vaporization section is of the *Submerged Combustion Vaporizer (SCV)* or *Open Rack Vaporizer (ORV)* type.

10. A regasification terminal for a liquefied gas, comprising a plurality of regasification lines according to any one of the preceding claims 6 to 9.

11. The regasification terminal for a liquefied gas according to the preceding claim, wherein said regasification lines are in parallel.

## Patentansprüche

1. Verfahren zur Generierung von mechanischer oder elektrischer Energie und thermischer Energie in einer Baureihe zur Regasifizierung verflüssigter Gase, welches die Schritte umfasst eines:
1) Generierens mechanischer oder elektrischer Energie und thermischer Energie mit Hilfe einer primären Bewegungsvorrichtung, wobei die primäre Bewegungsvorrichtung eine Verbrennungsmaschine (ICE) oder eine Gasturbine (GT) ist;
2) Betreibens eines Schrittes eines Regasifizierens des verflüssigten Gases mit einem ersten Zwischenfluid, wobei das erste Zwischenfluid temperiertes Wasser ist, welches mit Hilfe der thermischen Energie erwärmt wird, welche in Schritt 1) generiert wird, innerhalb eines ersten Wärmetauschers (HE1), welcher an einem Kreislauf des ersten Zwischenfluids betrieben wird;
3) Implementierens einer Wärmepumpe (HP) mit einem Kühlfluid, welche das Kühlen eines zweiten Zwischenfluids (HPF2) und das Erwärmen eines dritten Zwischenfluids (HPF3) betreibt, wobei das dritte Zwischenfluid temperiertes Wasser ist;
wobei
das dritte Zwischenfluid (HPF3) einen weiteren Schritt eines Regasifizierens des verflüssigten Gases betreibt und wobei die Wärmepumpe (HP) mit der elektrischen Energie versorgt wird, welche durch die primäre Bewegungsvorrichtung generiert wird.

2. Verfahren nach Anspruch 1, wobei das Kühlfluid ausgewählt ist aus der Gruppe, welche umfasst: Wasser-Glykol und andere Kühlfluide wie zum Beispiel R134a, R32, R143a, R125.

3. Verfahren nach einem der vorhergehenden Ansprüche 1 oder 2, wobei das zweite Zwischenfluid (HPF2) Meerwasser oder Umgebungsluft ist.

4. Verfahren nach einem der vorhergehenden Ansprüche aus 1 bis 3, wobei das verflüssigte Gas ausgewählt ist aus der Gruppe, welche umfasst: verflüssigtes Erdgas (LNG), Wasserstoff, Luft, Stickstoff, Kohlenwasserstoffverbindungen, Alkane, Propan und Butan, Alkene, Ethylen und Propylen.

5. Verfahren nach einem der vorhergehenden Ansprüche aus 1 bis 4, wobei ein Wärmeaustausch in dem Kondensator der Wärmepumpe (CPC) zwischen dem Kühlfluid und dem ersten Zwischenfluid durchgeführt wird, wobei Wärme zur letzteren transferiert wird.

6. Baureihe zum Regasifizieren von verflüssigtem Gas, umfassend einen Verdampfungsabschnitt des Gases, eine primäre Bewegungsvorrichtung, welche eine Verbrennungsmaschine (ICE) oder eine Gasturbine (GT) ist, einen ersten Wärmetauscher (HE1), welcher an dem Kreislauf des ersten Zwischenfluids betrieben ist, welches temperiertes Wasser ist, wobei der erste Wärmetauscher (HE1) einen Wärmeaustausch zwischen der thermischen Energie, welche durch die primäre Bewegungsvorrichtung erzeugt ist, und dem ersten Zwischenfluid implementiert, wobei das erste Zwischenfluid (HPF1) einen weiteren Wärmeaustausch in dem Verdampfungsabschnitt betreibt, mit welchem es Wärme zu dem verflüssigten Gas transferiert, und eine Wärmepumpe (HP), wobei die Wärmepumpe (HP) einen Verdampfer (VPC) und einen Kondensator (CPC) umfasst, wobei die Wärmepumpe mit einem Kühlfluid betrieben ist, welches in dem Verdampfer (VPC) Wärme von einem zweiten Zwischenfluid (HPF2) empfängt, und welche in dem Kondensator (CPC) Wärme an ein drittes Zwischenfluid (HPF3) transferiert, welches temperiertes Wasser ist, wobei das dritte Zwischenfluid (HPF3) einen weiteren Wärmeaustausch innerhalb des Verdampfungsabschnitts betreibt, mit welchem es Wärme zu dem verflüssigten Gas transferiert,
wobei
die primäre Bewegungsvorrichtung, die Wärmepumpe (HP) mit elektrischer Energie und das erste Zwischenfluid mit thermischer Energie versorgt.

7. Baureihe zum Regasifizieren von verflüssigtem Gas nach Anspruch 6, wobei das Kühlfluid ausgewählt ist aus der Gruppe, welche umfasst: Wasser-Glykol und andere Kühlfluide wie zum Beispiel R134a, R32, R143a, R125.

8. Baureihe zum Regasifizieren von verflüssigtem Gas nach Anspruch 6 oder 7, wobei das zweite Zwischenfluid (HPF2) Meerwasser oder Umgebungsluft ist.

9. Baureihe zum Regasifizieren von verflüssigtem Gas nach einem der vorhergehenden Ansprüche 6 bis 8, wobei der Verdampfungsabschnitt von verflüssigtem Gas von dem versenkten Verbrennungsverdampfer- (SCV) oder dem offenen Gestellverdampfer-Typ (ORV) ist.

10. Regasifizierungsterminal für ein verflüssigtes Gas, umfassend eine Mehrzahl von Baureihen zum Regasifizieren nach einem der vorhergehenden Ansprüche 6 bis 9.

11. Regasifizierungsterminal für ein verflüssigtes Gas nach dem vorhergehenden Anspruch, wobei die Baureihen zum Regasifizieren parallelgeschaltet sind.

## Revendications

1. Procédé de génération d'énergie mécanique ou électrique et d'énergie thermique dans une ligne de regazéification de gaz liquéfié, comprenant les étapes suivantes :
1) la génération d'énergie mécanique ou électrique et d'énergie thermique au moyen d'un moteur d'entraînement, le moteur d'entraînement étant un moteur à combustion interne (ICE) ou une turbine à gaz (GT) ;
2) la réalisation d'une étape de regazéification dudit gaz liquéfié avec un premier fluide intermédiaire, le premier fluide intermédiaire étant de l'eau tempérée chauffée au moyen de l'énergie thermique générée à l'étape 1) dans un premier échangeur de chaleur (HE1) fonctionnant sur un circuit dudit premier fluide intermédiaire ;
3) la mise en oeuvre d'une pompe à chaleur (HP) avec un fluide réfrigérant qui réalise le refroidissement d'un deuxième fluide intermédiaire (HPF2) et le chauffage d'un troisième fluide intermédiaire (HPF3), ledit troisième fluide intermédiaire étant de l'eau tempérée ;
dans lequel ledit troisième fluide intermédiaire (HPF3) réalise une autre étape de regazéification dudit gaz liquéfié et dans lequel ladite pompe à chaleur (HP) est alimentée par l'énergie électrique générée par ledit moteur d'entraînement.

2. Procédé selon la revendication 1, dans lequel ledit liquide réfrigérant est choisi dans le groupe qui comprend : eau-glycol et autres fluides réfrigérants tels que R134a, R32, R143a, R125.

3. Procédé selon l'une quelconque des revendications précédentes 1 ou 2, dans lequel ledit deuxième fluide intermédiaire (HPF2) est de l'eau de mer ou de l'air ambiant.

4. Procédé selon l'une quelconque des revendications précédentes 1 à 3, dans lequel ledit gaz liquéfié est choisi dans le groupe qui comprend : gaz naturel liquéfié (LNG), hydrogène, air, azote, composés d'hydrocarbure, alcanes, propane et butane, alcènes, éthylène et propylène.

5. Procédé selon l'une quelconque des revendications précédentes 1 à 4, dans lequel un échange de chaleur est réalisé dans le condenseur de la pompe à chaleur (CPC) entre le fluide réfrigérant et ledit premier fluide intermédiaire, avec transfert de chaleur à ce dernier.

6. Ligne de regazéification de gaz liquéfié comprenant une section de vaporisation dudit gaz, un moteur d'entraînement qui est un moteur à combustion interne (ICE) ou une turbine à gaz (GT), un premier échangeur de chaleur (HE1) fonctionnant sur le circuit d'un premier fluide intermédiaire qui est de l'eau tempérée, ledit premier échangeur de chaleur (HE1) réalisant un échange de chaleur entre l'énergie thermique produite par ledit moteur d'entraînement et ledit premier fluide intermédiaire, ledit premier fluide intermédiaire (HPF1) réalisant un autre échange de chaleur dans ladite section de vaporisation, grâce auquel il transfère de la chaleur au gaz liquéfié, et une pompe à chaleur (HP), ladite pompe à chaleur (HP) comprenant un évaporateur (VPC) et un condenseur (CPC), ladite pompe à chaleur fonctionnant avec un fluide réfrigérant qui, dans ledit évaporateur (VPC), acquiert de la chaleur d'un deuxième fluide intermédiaire (HPF2) et qui, dans ledit condenseur (CPC), transfère de la chaleur à un troisième fluide intermédiaire (HPF3), qui est de l'eau tempérée, ledit troisième fluide intermédiaire (HPF3) réalisant un autre échange de chaleur, grâce auquel, dans ladite section de vaporisation, il transfère de la chaleur au gaz liquéfié, ledit moteur d'entraînement alimentant ladite pompe à chaleur (HP) en énergie électrique et ledit premier fluide intermédiaire en énergie thermique.

7. Ligne de regazéification de gaz liquéfié selon la revendication 6, dans laquelle ledit liquide réfrigérant est choisi dans le groupe qui comprend : eau-glycol et autres fluides réfrigérants tels que R134a, R32, R143a, R125.

8. Ligne de regazéification de gaz liquéfié selon la revendication 6 ou 7, dans laquelle ledit deuxième fluide intermédiaire (HPF2) est de l'eau de mer ou de l'air ambiant.

9. Ligne de regazéification de gaz liquéfié selon l'une quelconque des revendications précédentes 6 à 8, dans laquelle ladite section de vaporisation de gaz liquéfié est du type vaporisateur à combustion submergée (SCV) ou vaporisateur direct à ruissellement d'eau (ORV).

10. Terminal de regazéification pour gaz liquéfié, comprenant une pluralité de lignes de regazéification selon l'une quelconque des revendications précédentes 6 à 9.

11. Terminal de regazéification pour gaz liquéfié selon la revendication précédente, dans lequel lesdites lignes de regazéification sont en parallèle.
